# EUROPEAN PATENT APPLICATION

(11) **EP 4 636 018 A1**
(43) Date of publication of application: **22.10.2025**
(21) Application number: 23903551.2
(22) Date of filing: 13.12.2023
(51) Int. Cl.: C08J 9/12

(54) **METHOD FOR PRODUCING POLYETHYLENE RESIN FOAM SHEET, AND POLYETHYLENE RESIN FOAM SHEET**

(30) Priority: 15.12.2022 JP 2022200274
(71) Applicant: JSP Corporation, Tokyo 100-0005 (JP)
(72) Inventor: KAYANOKI, Yusuke, Kanuma-shi Tochigi 322-0014 (JP); KATSUYAMA, Naoya, Kanuma-shi Tochigi 322-0014 (JP); KAKUTA, Hirotoshi, Kanuma-shi Tochigi 322-0014 (JP)
(74) Representative: KBN IP Patentanwälte Partnerschaft mbB
(86) International application number: PCT/JP2023/044709
(87) International publication number: WO 2024/128267

(57) **Abstract**

A method for producing a polyethylene-based resin foam sheet and a polyethylene-based resin foam sheet are provided without depending on an inorganic substance and a chemical blowing agent, and the method enables production of a good polyethylene-based resin foam sheet.

In a first way of the method including extrusion-foaming a foamable resin melt containing a polyethylene-based resin and a physical blowing agent to produce a polyethylene-based resin foam sheet, one or more organic physical blowing agents selected from hydrocarbons having 3 to 5 carbon atoms and dialkyl ethers having an alkyl group having 1 to 3 carbon atoms and nitrogen are used as a physical blowing agent, and adjustment is performed so that the total (A + B) of the amount A of the organic physical blowing agents added and the amount B of the nitrogen added is 0.5 mol or more and 5 mol or less per kg of a resin component, the amount B of the nitrogen added is 0.1 mol or more and 0.4 mol or less per kg of the resin component, and the ratio (A/B) of the amount A of the organic physical blowing agents added to the amount B of the nitrogen added is 2 or more and 18 or less. The polyethylene-based resin foam sheet of the present invention has a density of 20 kg/m³ or more and 100 kg/m³ or less and an average of the number of cells of 0.5 cells/mm or more and 5 cells/mm or less in the thickness direction, the foam sheet has an ash content of less than 0.1 mass% (including 0), and the ash content includes sodium at a proportion of 10 mass% or less (including 0).

## Description

### Technical Field

The present invention relates to a method for producing a polyethylene-based resin foam sheet, and to a polyethylene-based resin foam sheet.

### Background Art

A polyethylene-based resin foam sheet is excellent in flexibility and a cushioning property, and is used as a cushioning material or a packaging material. More specifically, examples of the use of a polyethylene-based resin foam sheet include uses as wrapping materials for easily breakable articles, packaging materials for glass panels for image display devices such as liquid crystal displays and glass plates for cover glasses for mobile phones and the like, and packaging materials for electronic devices. Furthermore, a polyethylene-based resin foam sheet may be used as an interleaf sandwiched between glass panels stacked for transportation or the like. Hereinafter, an article to be wrapped or packaged in a foam sheet, or an article to be cushioned with an interleaf or the like made of a foam sheet may be referred to as an article to be wrapped.

For example, Patent Literature 1 below discloses a polyolefin-based resin foam sheet used for surface protection of a panel with a transparent electrode (hereinafter, also referred to as prior art 1). Patent Literature 1 describes that the prior art 1 is a resin sheet including a polyolefin-based resin and an inorganic substance such as talc or calcium carbonate that serves as a cell controlling agent.

### Citation List

### Patent Literature

Patent Literature 1: JP 2016-169329 A

### Summary of Invention

### Technical Problem

In the case of wrapping an article to be wrapped, such as a glass panel used in a liquid crystal display, that is required to maintain strict cleanliness in a foam sheet, the foam sheet is also required to have a low contamination property.

In the case of producing a conventional polyethylene-based resin foam sheet as in the prior art 1, an inorganic substance such as talc or a chemical blowing agent such as a sodium baking soda-citric acid-based chemical blowing agent is generally used as a cell controlling agent together with a physical blowing agent in order to foam the resin. Components such as the cell controlling agent and the chemical blowing agent derived from the cell controlling agent usually remain in the produced foam sheet. Therefore, in some use environments, these components appear on the surface of the foam sheet and may contaminate an article to be wrapped. Thus, a foam sheet produced with a conventional production method has room for improvement from the viewpoint of the contamination property to an article to be wrapped.

In the following description, an inorganic substance and a chemical blowing agent may be simply referred to as a cell controlling agent.

From the viewpoint of material recycling required in the recent recycling-oriented society, recycling of polyethylene-based resin foam sheets has been studied. However, polyethylene-based resin foam sheets recovered for recycling contain a remaining component derived from a cell controlling agent. Amounts of the remaining component derived from a cell controlling agent in recycled raw materials prepared from the recovered polyethylene-based resin foam sheets contain varies from recycled raw material to recycled raw material. In the case of producing a polyethylene-based resin foam sheet using such a recycled raw material, the foaming state is more likely to fluctuate than in the case of using 100% of a virgin resin, and production of a foam sheet over a long time tends to include many times of adjustment of the production conditions for obtaining a foam sheet satisfying a predetermined standard. Thus, in the case of using a conventional polyethylene-based resin foam sheet as a recycled raw material and producing a polyethylene-based resin foam sheet again, there is room for improvement in productivity. In the present description, the term "virgin resin" refers to an unused resin that is not subjected to molding, processing, and the like after the resin is obtained by polymerization, that is, a non-recycled resin.

The present invention has been made in view of such a demand. The present invention provides a method for producing a polyethylene-based resin foam sheet in which a good polyethylene-based resin foam sheet can be produced, and provides a polyethylene-based resin foam sheet, without depending on an inorganic substance and a chemical blowing agent.

### Solution to Problem

A first production method of a polyethylene-based resin foam sheet (hereinafter, also simply referred to as a foam sheet) of the present invention is a method including extrusion-foaming a foamable resin melt containing a polyethylene-based resin and a physical blowing agent to produce a polyethylene-based resin foam sheet, and the physical blowing agent contains one or more organic physical blowing agents selected from hydrocarbons having 3 to 5 carbon atoms and dialkyl ethers having an alkyl group having 1 to 3 carbon atoms, and contains nitrogen, the total (A + B) of the amount A of the organic physical blowing agents added and the amount B of the nitrogen added is 0.5 mol or more and 5 mol or less per kg of a resin component included in the foamable resin melt, the amount B of the nitrogen added is 0.1 mol or more and 0.4 mol or less per kg of the resin component included in the foamable resin melt, and the ratio (A/B) of the amount A of the organic physical blowing agents added to the amount B of the nitrogen added is 2 or more and 18 or less.

A second production method of a polyethylene-based resin foam sheet of the present invention includes extrusion-foaming a foamable resin melt containing a polyethylene-based resin and a physical blowing agent, the polyethylene-based resin containing a recycled polyethylene-based resin derived from a foam sheet produced with a method for producing a foam sheet of the first production method.

The polyethylene-based resin foam sheet of the present invention is a polyethylene-based resin foam sheet obtained by extrusion-foaming a foamable resin melt containing a polyethylene-based resin and a physical blowing agent, the polyethylene-based resin foam sheet has a density of 20 kg/m³ or more and 100 kg/m³ or less and an average of a number of cells of 0.5 cells/mm or more and 5 cells/mm or less in the thickness direction, the polyethylene-based resin foam sheet has an ash content of less than 0.1 mass% (including 0), and the ash content includes sodium at a proportion of 10 mass% or less (including 0).

### Advantageous Effects of Invention

According to the first production method of a polyethylene-based resin foam sheet of the present invention, a polyethylene-based resin can be well foamed without depending on an inorganic substance and a chemical blowing agent. Therefore, an article to be wrapped can be restrained from being contaminated by a residue derived from the inorganic substance or the chemical blowing agent.

According to the second production method of a polyethylene-based resin foam sheet of the present invention, a polyethylene-based resin foam sheet produced without depending on an inorganic substance and a chemical blowing agent is used as a recycled raw material.

Therefore, in the recycled raw material, a residue derived from the inorganic substance or the chemical blowing agent is not contained, or is reduced. Thus, in a case where a polyethylene-based resin foam sheet is newly produced using the recycled raw material, the foaming state of the foam sheet is less likely to fluctuate during the production, and as a result, a good foam sheet can be stably produced even in long-term production.

The polyethylene-based resin foam sheet of the present invention has an ash content of 0 or a small ash content, and contains substantially no component derived from a chemical blowing agent. Therefore, the foam sheet of the present invention has improved well in the contamination property to an article to be wrapped, and is suitable as a wrapping material for an article, such as a glass panel used in a liquid crystal display, that is required to maintain strict cleanliness. From the viewpoint of capability of producing the above-described good foam sheet stably, the used polyethylene-based resin foam sheet of the present invention or an offcut or the like generated at the time of producing the polyethylene-based resin foam sheet of the present invention is suitable as a recycled raw material of a foam sheet.

### Description of Embodiments

### [First Production Method]

First, a first production method of the present invention will be described. The first production method of the present invention is a method including extrusion-foaming a foamable resin melt containing a polyethylene-based resin and a physical blowing agent to produce a polyethylene-based resin foam sheet, and specifically, a method including extrusion-foaming a foamable resin melt obtained by kneading a polyethylene-based resin and a physical blowing agent to produce a polyethylene-based resin foam sheet. The physical blowing agent in the present invention contains one or more organic physical blowing agents selected from hydrocarbons having 3 to 5 carbon atoms and dialkyl ethers having an alkyl group having 1 to 3 carbon atoms and contains nitrogen.

In the present invention, the total of the amount A (mol) of the organic physical blowing agent added and the amount B (mol) of the nitrogen added is adjusted in a range of 0.5 mol or more and 5 mol or less per kg of a resin component included in the foamable resin melt. The ratio (A/B) of the amount A of the organic physical blowing agent added per kg of the resin component included in the foamable resin melt to the amount B of the nitrogen added per kg of the resin component included in the foamable resin melt is adjusted to 2 or more and 18 or less. Here, the resin component refers to the polyethylene-based resin supplied to an extrusion apparatus and another optionally added polymer, and a polymeric antistatic agent is also included in the resin component. The resin component does not contain a physical blowing agent. The amount of the physical blowing agent added per kg of the resin component can be determined by dividing the amount of the added physical blowing agent supplied to the extrusion apparatus per time by the amount of the resin component extruded from the extrusion apparatus per time and converting the unit.

Thus, a good foam sheet can be produced by adding a hydrocarbon or the like and nitrogen in a specific relationship without depending on an inorganic substance and a chemical blowing agent.

In the present invention, the amount B of the nitrogen added is adjusted to a range of 0.1 mol or more and 0.4 mol or less, preferably 0.15 mol or more and 0.38 mol or less, and more preferably 0.2 mol or more and 0.36 mol or less per kg of the resin component included in the foamable resin melt.

In production of a polyethylene-based resin foam sheet, a cell controlling agent used together with an organic physical blowing agent such as butane generally separates the organic physical blowing agent favorably from a foamable resin melt when the foamable resin melt is extruded from an extruder to atmospheric pressure. Therefore, it is understood that the cell controlling agent acts as a cell nucleus for foaming of the foamable resin melt. Here, examples of the cell controlling agent include powdery inorganic substances (inorganic cell controlling agents) and powdery chemical blowing agents (chemical blowing agent-based cell controlling agents). Examples of the inorganic substances include metal borates such as zinc borate, magnesium borate, and borax, talc, sodium chloride, aluminum hydroxide, zeolite, silica, and calcium carbonate. Examples of the chemical blowing agents include baking soda -citric acid-based chemical blowing agents, azodicarbonamide, hydrazodicarbonamide, azobisisobutyronitrile, N,N'-dinitrosopentamethylenetetramine, P,P'-oxybis benzenesulfonyl hydrazide, and ammonium carbonate. The baking soda-citric acid-based chemical blowing agents are a mixture of sodium hydrogen carbonate and citric acid and/or sodium citrate. Examples of the sodium citrate include monosodium citrate, disodium citrate, and trisodium citrate. The chemical blowing agent acts as a blowing agent at the time of extrusion-foaming, and has an action of generating gas by a chemical reaction or thermal decomposition to form cell nuclei. Furthermore, it is considered that the reactant (residue) of the baking soda-citric acid-based chemical blowing agent or the like also acts as a cell nucleus. As the inorganic substance, an inorganic substance is preferably selected that generates no gas by thermal decomposition at the time of extrusion-foaming.

In production of a conventional polyethylene-based resin foam sheet, an inorganic substance such as talc and/or a baking soda-citric acid-based chemical blowing agent tends to be commonly used as a cell controlling agent.

These cell controlling agents are solid at normal temperature, and are generally used in a powdery form. In the present invention and the present description, the cell controlling agent that is a powdery inorganic substance or a powdery chemical blowing agent more specifically refers to a powdery cell controlling agent having a median diameter (d50) of about 1 µm or more and 100 µm or less as measured by laser diffraction scattering particle size distribution measurement. Here, the normal temperature is 20°C. The phrase "solid at normal temperature" means being solid under the condition at 20°C defined in "8.1 Conditions of analysis site" in JIS K 0050: 2019 (General rules for chemical analysis).

In the present description, the expression "A and/or B" means "A and B" or "A or B".

In a case where a chemical blowing agent such as a baking soda-citric acid-based chemical blowing agent is used in production of a polyethylene-based resin foam sheet, a residue of the chemical blowing agent may remain in a state of a metal salt such as a sodium salt in the produced foam sheet. The residue is an unreacted undecomposed component of the chemical blowing agent or a residue after the reaction of the chemical blowing agent, or the like.

The residue of such a chemical blowing agent appears on the surface of the foam sheet in some use environments as described above, and this residue may contaminate an article to be wrapped. Therefore, from such a viewpoint, there is room for improvement in a conventional foam sheet in which a chemical blowing agent is used.

An inorganic substance used as a cell controlling agent can also remain as a residue in the produced foam sheet.

As described above, in a recycled raw material obtained by recovering a polyethylene-based resin foam sheet produced using a cell controlling agent, a component derived from the cell controlling agent remains. The amount of the cell controlling agent used is not necessarily the same among the foam sheets produced, for example, in accordance with different standards, and therefore recycled raw materials contain different amounts of the remaining component derived from the cell controlling agent. Even among the foam sheets produced in accordance with the same standard, the amount of the cell controlling agent added may be different due to differences in lot and production date, and as a result of this fact, recycled raw materials tend to contain different amounts of the remaining component derived from the cell controlling agent. Therefore, if a polyethylene-based resin foam sheet is produced using such a recycled raw material, the foaming state is more likely to fluctuate than in the case of producing a foam sheet using 100% of a virgin resin. So, at the time of using a recycled raw material, in order to stably produce a foam sheet in which the standards of the foaming ratio, the number of cells in the foam sheet, the thickness, and the like are within desired ranges, many times of adjustment may be performed including adjustment of the amount of the cell controlling agent to be newly added in consideration of the amount of the remaining component derived from the cell controlling agent in the recycled raw material and adjustment of the production conditions according to the fluctuation of the foaming state. Thus, in the conventional production method, there is room for improvement in productivity at the time of producing a polyethylene-based resin foam sheet using a recycled raw material.

The present inventors have studied improvement of the problem caused by the cell controlling agent described above. As a result, a way has been found in which nitrogen is dissolved, as an alternative to a part or the whole of the cell controlling agent used together with the organic physical blowing agent, at a proportion in a predetermined range together with the organic physical blowing agent in the resin melt. The reason why good foamability can be achieved with such a way is not clear, but the present inventors presume as follows. That is, in the molten polyethylene-based resin in the extruder, the solubility of nitrogen is appropriately smaller than the solubility of the organic physical blowing agent such as butane. Therefore, it is considered that a decrease in the pressure due to extrusion easily causes a state in which separation of nitrogen from the foamable resin melt prior to separation of the physical blowing agent from the foamable resin melt. As a result, it has been presumed that at the time of extrusion-foaming, first, nitrogen is separated from the foamable resin melt to generate fine cells in the resin melt, then the cells serve as cell nuclei to promote separation of the organic physical blowing agent from the foamable resin melt, thus cells grow, and as a result, good foaming is achieved.

From the viewpoint of more sufficiently reducing the contamination property to an article to be wrapped and the viewpoint of providing a recycled raw material capable of achieving more excellent productivity, it is preferable that a powdery inorganic substance and a powdery chemical blowing agent be not added to the foamable resin melt, or a powdery inorganic substance and/or a powdery chemical blowing agent be added to the foamable resin melt at a predetermined proportion or less, and it is more preferable that a powdery inorganic substance and a powdery chemical blowing agent be not added to the foamable resin melt. In the case of adding a powdery inorganic substance and/or a powdery chemical blowing agent to the foamable resin melt, the total of the amount of the inorganic substance added and the amount of the chemical blowing agent added is preferably less than 0.1 parts by mass, more preferably 0.05 parts by mass or less, and still more preferably 0.02 parts by mass or less with respect to 100 parts by mass of the resin component included in the foamable resin melt.

In the case of adding a powdery inorganic substance to the foamable resin melt, the amount of the inorganic substance added is preferably less than 0.1 parts by mass, more preferably 0.05 parts by mass or less, and still more preferably 0.02 parts by mass or less with respect to 100 parts by mass of the resin component included in the foamable resin melt. In the case of adding a chemical blowing agent to the foamable resin melt, the amount of the chemical blowing agent added is preferably less than 0.1 parts by mass, more preferably 0.05 parts by mass or less, and still more preferably 0.02 parts by mass or less with respect to 100 parts by mass of the resin component included in the foamable resin melt.

Hereinafter, details of the present invention will be further described. In the present description, a preferred numerical range of the present invention may be appropriately indicated. In this case, a preferred range, a more preferred range, and a particularly preferred range can be determined, regarding the upper limit and the lower limit of the numerical range, from all combinations of the upper limit and the lower limit.

The powdery inorganic substance herein refers to an inorganic substance not containing a chemical blowing agent.

### (Extrusion-Foaming Method)

In the first production method of the present invention, a polyethylene-based resin foam sheet is produced with an extrusion-foaming method. The extrusion-foaming method in the present invention can be appropriately selected and adopted from conventionally known extrusion-foaming methods except for the above-described specific requirements. For example, a polyethylene-based resin and an optional additive are supplied to an extruder, and heated and melted to form a resin melt, then a physical blowing agent is injected into the resin melt, and the resulting mixture is further kneaded to prepare a foamable resin melt for formation of a foam sheet. Then, the foamable resin melt is adjusted in the extruder to a resin temperature at which foaming can be performed, and extruded into the atmosphere through a die and foamed, and thus an extruded foam sheet can be formed. Examples of the die provided in the extrusion apparatus include an annular die and a T-die. In the case of using an annular die, the foamable resin melt is extruded into the atmosphere through the annular die, the foamable resin melt is foamed to form a cylindrical foam, then while the cylindrical foam is hauled off during diameter expansion along a cylindrical cooling apparatus called a mandrel, the cylindrical foam is cut and opened along the extrusion direction, and thus a foam sheet can be obtained.

### (Polyethylene-Based Resin)

Examples of the polyethylene-based resin used in the first production method of the present invention include resins including 50 mol% or more of an ethylene component unit, and specific examples of the polyethylene-based resin include high-density polyethylene, low-density polyethylene, linear low-density polyethylene, ultra-low-density polyethylene, ethylene-vinyl acetate copolymers, ethylene-methyl methacrylate copolymers, ethylene-ethyl acrylate copolymers, and mixtures of two or more thereof. Among them, low-density polyethylene is preferably contained as a main component in the polyethylene-based resin from the viewpoint of capability of producing a foam sheet having a more excellent cushioning property. More specifically, the proportion of the low-density polyethylene in the polyethylene-based resin is preferably 50 mass% or more, more preferably 60 mass% or more, and still more preferably 80 mass% or more.

The melt mass-flow rate (MFR) of the polyethylene-based resin is not particularly limited as long as the desired object of the present invention can be achieved, and is preferably 1 g/10 min or more and 20 g/10 min or less, and more preferably 2 g/10 min or more and 15 g/10 min or less.

The MFR is measured in accordance with JIS K 7210-1: 2014 (190°C, load 2.16 kg). In the case of using two or more polyethylene-based resins in combination, the MFR of the mixture thereof is preferably within the above range.

In the first production method, any polymer can be used as a resin component in addition to the above-described polyethylene-based resin as long as the object and an effect of the present invention are not impaired. Examples of the polymer include thermoplastic resins other than polyethylene-based resins, such as polypropylene-based resins and polystyrene-based resins, and elastomers such as ethylene propylene rubber and styrene-butadiene-styrene block copolymers. In a case where the polymer is blended, the amount of the polymer blended is preferably 30 parts by mass or less, more preferably 20 parts by mass or less, and particularly preferably 10 parts by mass or less with respect to 100 parts by mass of the polyethylene-based resin used in the first production method.

In the first production method of the present invention, a functional additive may be added such as an antioxidant, an antistatic agent, a surfactant, a heat stabilizer, an anti-weathering agent, an ultraviolet absorber, or a flame retardant, as long as the object and an effect of the present invention are not impaired.

From the viewpoint of imparting antistatic performance to the foam sheet, a polymeric antistatic agent is preferably used as the antistatic agent. As the polymeric antistatic agent, for example, a polymeric antistatic agent can be used that has a surface resistivity of 1 × 10¹¹ Ω or less. Examples of the polymeric antistatic agent include polyethers, polyether ester amides, block copolymers of a polyether and a polyolefin, and ionomer resins. Among them, a block copolymer of a polyether and a polyolefin and/or an ionomer resin is preferable.

Examples of the block copolymer include block copolymers having a structure in which a polyolefin block and a polyether block are repeatedly and alternately bonded via a bond such as an ester bond, an amide bond, an ether bond, a urethane bond, or an imide bond.

The ionomer resin is a resin in which molecules of a copolymer of ethylene and an unsaturated carboxylic acid are intermolecularly crosslinked with a metal ion. Examples of the unsaturated carboxylic acid include acrylic acid and methacrylic acid. Examples of the metal ion include lithium, sodium, potassium, and calcium.

Specific examples of such a polymeric antistatic agent include block copolymers of a polyether and a polyolefin that are commercially available under trade names including "PELESTAT 300", "PELECTRON HS", and "PELECTRON LMP" manufactured by Sanyo Chemical Industries, Ltd., and ionomer resins that are commercially available under trade names including "ENTIRA SD100" and "ENTIRA MK400" manufactured by Du Pont-Mitsui Polychemicals Co., Ltd.

In a case where the additive is blended, the amount of the additive blended is preferably 30 parts by mass or less, more preferably 20 parts by mass or less, and particularly preferably 10 parts by mass or less with respect to 100 parts by mass of the polyethylene-based resin used in the first production method. In a case where the polymeric antistatic agent is blended as the resin component, the amount of the polymeric antistatic agent blended is preferably 30 parts by mass or less, more preferably 20 parts by mass or less, and particularly preferably 10 parts by mass or less with respect to 100 parts by mass of the polyethylene-based resin used in the first production method. The lower limit of the amount of the polymeric antistatic agent blended can be determined according to the target antistatic property.

### (Physical Blowing Agent)

In the first production method of the present invention, an organic physical blowing agent and nitrogen are used in combination as the physical blowing agent. The organic physical blowing agent and nitrogen may be supplied to an extruder simultaneously or at different timings.

The organic physical blowing agent is specifically one or more organic physical blowing agents selected from hydrocarbons having 3 to 5 carbon atoms and dialkyl ethers having an alkyl group having 1 to 3 carbon atoms. Examples of the hydrocarbon having 3 to 5 carbon atoms include butane, pentane, propane, and hydrofluoroolefins such as 1-chloro-3,3,3-trifluoropropene (HCFO-1233zd). Examples of the dialkyl ether having an alkyl group having 1 to 3 carbon atoms include dimethyl ether. Among them, an organic physical blowing agent is preferably used that contains butane and/or dimethyl ether as a main component. Specifically, the total of the proportion of butane and the proportion of dimethyl ether in the organic physical blowing agent is preferably 50 mol% or more, more preferably 60 mol% or more, still more preferably 80 mol% or more, and particularly preferably 90 mol% or more. The proportion of butane in the organic physical blowing agent is preferably 50 mol% or more, more preferably 80 mol% or more, and still more preferably 90 mol% or more.

Nitrogen is known as a kind of inorganic physical blowing agent. In the present invention, it is important that the organic physical blowing agent and nitrogen described above are used at a proportion within a predetermined range.

### (Amount of Organic Physical Blowing Agent Added and Nitrogen Added)

Specifically, the total (A + B) of the amount A of the organic physical blowing agent added and the amount B of the nitrogen added is adjusted in a range of 0.5 mol or more and 5 mol or less per kg of the resin component included in the foamable resin melt. If the total is too small or too large, good foamability cannot be obtained, and a desired foam sheet may be not produced. From such a viewpoint, the total (A + B) is preferably in a range of 0.8 mol or more and 4 mol or less, and more preferably in a range of 1 mol or more and 3 mol or less per kg of the resin component. The numerical range of the total (A + B) can be, for example, a range having a lower limit selected from the group consisting of 0.5 mol, 0.8 mol, and 1 mol and an upper limit selected from the group consisting of 5 mol, 4 mol, and 3 mol.

In the above-described range of the total (A + B) of the physical blowing agent, the amount B of the nitrogen added is adjusted to 0.1 mol or more and 0.4 mol or less per kg of the resin component included in the foamable resin melt. If the amount B of the nitrogen added is adjusted to 0.1 mol or more, good foamability can be exhibited even in a case where the cell controlling agent is not used or is used in only a small amount. From such a viewpoint, the amount B of the nitrogen added is preferably 0.12 mol or more, and more preferably 0.16 mol or more per kg of the resin component. If the amount B of the nitrogen added is adjusted to 0.4 mol or less, a well-foamed foam sheet can be produced in which cells are not excessively fine. From such a viewpoint, the amount B of the nitrogen added is preferably 0.38 mol or less per kg of the resin component. The numerical range of the amount B can be, for example, a range having a lower limit selected from the group consisting of 0.1 mol, 0.12 mol, and 0.16 mol and an upper limit selected from the group consisting of 0.4 mol and 0.38 mol.

In the first production method of the present invention, the ratio (A/B) of the amount A of the organic physical blowing agent added to the amount B of the nitrogen added is adjusted to 2 or more and 18 or less per kg of the resin component included in the foamable resin melt. If the ratio (A/B) is 2 or more, a well-foamed foam sheet can be produced in which cells are not excessively fine. From the viewpoint of facilitating stable production of a desired foam sheet, the ratio (A/B) is preferably 3 or more, and more preferably 4 or more. If the ratio (A/B) is 18 or less, good foamability is achieved, and a good foam sheet can be produced that is suitable for packaging and wrapping. From the viewpoint of facilitating stable production of a desired foam sheet, the ratio (A/B) is preferably 14 or less, and more preferably 12 or less. The numerical range of the ratio (A/B) can be, for example, a range having a lower limit selected from the group consisting of 2, 3, and 4, and an upper limit selected from the group consisting of 18, 14, and 12.

In the total (A + B) of the physical blowing agent adjusted to a range of 0.5 mol or more and 5 mol or less per kg of the resin component, the amount A of the organic physical blowing agent added can be appropriately determined in consideration of the desired foaming ratio of the foam sheet and the above-described amount B of the nitrogen added. For example, the amount A of the organic physical blowing agent added is to be adjusted to 0.4 mol or more and 4.6 mol or less per kg of the resin component included in the foamable resin melt. From the viewpoint of facilitating stable production of a desired foam sheet, the amount A of the organic physical blowing agent added is preferably 0.5 mol or more and 4.0 mol or less, and more preferably 0.8 mol or more and 3.5 mol or less per kg of the resin component. The numerical range of the amount A can be, for example, a range having a lower limit selected from the group consisting of 0.4 mol, 0.5 mol, and 0.8 mol, and an upper limit selected from the group consisting of 5 mol, 4.6 mol, 4.0 mol, and 3.5 mol.

In the case of adding two or more organic physical blowing agents as the organic physical blowing agent, the total of the organic physical blowing agents used is preferably within the above range. Furthermore, a physical blowing agent other than the organic physical blowing agent and nitrogen may be used in combination as long as the object and an effect of the present invention are not impaired.

### (Foam Sheet)

The use of a foam sheet produced with the above-described first production method is not particularly limited, and typical examples of the use include uses as wrapping materials for easily breakable articles, packaging materials for glass panels for image display devices such as liquid crystal displays and glass plates for cover glasses for mobile phones and the like, and packaging materials for electronic devices. From the viewpoint of providing a foam sheet suitable for these uses, adjustment is to be performed in the production so as to set the amount of the remaining component derived from the cell controlling agent in the foam sheet, the thickness and the like of the sheet, and the cell diameter in the sheet in the following ranges.

### (Amount of Remaining Component Derived from Cell Controlling Agent in Foam Sheet)

Measurement of ash content:
The remaining component derived from the cell controlling agent (the inorganic substance and the chemical blowing agent) in the foam sheet can be confirmed by measuring the ash content of the foam sheet or measuring the amount of sodium included in the ash content.

From the viewpoint of a low contamination property to an article to be wrapped and the viewpoint of obtaining a recycled raw material capable of achieving stable production of a foam sheet, the foam sheet preferably has an ash content of less than 0.1 mass% (including 0), and the proportion of sodium in the ash content contained in the foam sheet is preferably 10 mass% or less (including 0).

From a conventional foam sheet produced using, for example, talc as an inorganic substance, a large amount of ash content in the foam sheet is detected. In a conventional foam sheet produced using a citric acid-baking soda-based chemical blowing agent as a chemical blowing agent, the ash content in the foam sheet includes a large amount of sodium. From such a viewpoint, the proportion of sodium in the ash content is more preferably 5 mass% or less (including 0). The ash content in the foam sheet is preferably small, for example, the ash content is preferably less than 0.05 mass%, and more preferably 0.02 mass% or less in 100 mass% of the foam sheet, and the ash content in the foam sheet is particularly preferably 0.

The ash content in the foam sheet can be measured with a method in accordance with JIS K7250-1: 2006. More specifically, the measurement method in Examples described below is referred to.

The proportion of sodium in the ash content can be measured by energy dispersive X-ray spectrometry (EDX). More specifically, the measurement method in Examples described below is referred to.

### (Average Thickness of Foam Sheet)

The average thickness of the foam sheet is not particularly limited, from the viewpoint of being suitable for use as a packaging material, a wrapping material, or an interleaf, the average thickness is preferably 0.05 mm or more and 10 mm or less, more preferably 0.1 mm or more and 8 mm or less, and still more preferably 0.1 mm or more and 6 mm or less. From the viewpoint of being more suitable for use as an interleaf, the average thickness of the foam sheet is preferably 0.05 mm or more and 3 mm or less, and more preferably 0.1 mm or more and 2 mm or less.

The average thickness of the foam sheet is measured with the following method.

First, a cut surface orthogonal to the extrusion direction of the foam sheet (section in the width direction) is cut out, and five or more cut surface observation portions are randomly selected in the width direction of the foam sheet. Next, each selected observation portion is magnified about 50 times with a microscope or the like to obtain an enlarged image of each portion. Next, the thickness of the foam sheet is measured at random 10 points in each enlarged image. The arithmetic mean value of the measured thicknesses at 50 or more portions in total is regarded as the average thickness of the foam sheet.

For the measurement of the thickness of the foam sheet, a foam sheet is used that is in a state adjusted for 24 hours or more under the conditions of a temperature of 23 ± 5°C and a relative humidity of 50%.

### (Basis Weight of Foam Sheet)

The basis weight of the foam sheet is not particularly limited, from the viewpoint of being suitable for use as a packaging material, a wrapping material, or an interleaf, the basis weight is preferably 10 g/m² or more and 200 g/m² or less, more preferably 12 g/m² or more and 150 g/m² or less, and still more preferably 15 g/m² or more and 100 g/m² or less.

The basis weight of the foam sheet is obtained by cutting out a sample having a predetermined area from the foam sheet, measuring the mass of the sample, and converting the unit into g/m².

### (Density of Foam Sheet)

A density of the foam sheet produced with the first production method is preferably 20 kg/m³ or more and 100 kg/m³ or less, more preferably 30 kg/m³ or more and 90 kg/m³ or less, and still more preferably 35 kg/m³ or more and 50 kg/m³ or less. A foam sheet having such a density is suitable for various uses such as uses as wrapping materials for easily breakable articles, packaging materials for glass panels for image display devices such as liquid crystal displays and glass plates for cover glasses for mobile phones and the like, and packaging materials for electronic devices. The numerical range of the density can be, for example, a range having a lower limit selected from the group consisting of 20 kg/m³, 30 kg/m³, and 35 kg/m³, and an upper limit selected from the group consisting of 100 kg/m³, 90 kg/m³, and 50 kg/m³.

The density of the foam sheet is calculated by dividing the above-described basis weight of the foam sheet by the average thickness of the foam sheet and converting the unit.

### (Average of Number of Cells in Thickness Direction of Foam Sheet)

The average of the number of cells in the thickness direction of the foam sheet is preferably 0.5 cells/mm or more and 5 cells/mm or less, more preferably 0.6 cells/mm or more and 4 cells/mm or less, still more preferably 0.8 cells/mm or more and 3 cells/mm or less, and still even more preferably 0.8 cells/mm or more and 2 cells/mm or less, from the viewpoint of obtaining a foam sheet that has a desired foaming ratio (density), good appearance, and a good cushioning property and can be suitably used as a wrapping material or a packaging material. In other words, according to the first production method of the present invention, a foam sheet can be favorably produced in which the number of cells per thickness of the foam sheet is in the above range. The numerical range of the average of the number of cells can be, for example, a range having a lower limit selected from the group consisting of 0.5 cells/mm, 0.6 cells/mm, and 0.8 cells/mm, and an upper limit selected from the group consisting of 5 cells/mm, 4 cells/mm, 3 cells/mm, and 2 cells/mm.

The average of the number of cells in the thickness direction of the foam sheet is determined as follows.

First, the foam sheet is cut along a direction orthogonal to the extrusion direction of the foam sheet to form a cut surface (section in the width direction), and five or more cut surface observation portions are randomly selected in the width direction of the foam sheet. Next, each selected observation portion is observed at a magnification of about 50 times to obtain an enlarged image of each portion. Next, in the enlarged image, 10 line segments along the thickness direction of the foam sheet are randomly drawn on the cut surface, and the cells intersecting the line segments are counted. Then, the number of cells counted on each line segment is divided by the length of the line segment, and the unit is converted to determine the number of cells per thickness (cells/mm) of the foam sheet at each measurement portion. The arithmetic mean value of the number of cells per thickness of the foam sheet is determined for 50 or more portions measured in this manner in total, and is regarded as the average of the number of cells in the thickness direction of the foam sheet.

### (Average of Number of Cells per Sectional Area of Foam Sheet)

The average of the number of cells per sectional area of the foam sheet is preferably 30 cells/cm² or more and 3000 cells/cm² or less, more preferably 35 cells/cm² or more and 2800 cells/cm² or less, still more preferably 40 cells/cm² or more and 2000 cells/cm² or less, and still even more preferably 45 cells/cm² or more and 1000 cells/cm² or less, from the viewpoint of obtaining a foam sheet that has a desired foaming ratio (density), good appearance, and a good cushioning property and can be suitably used as a wrapping material or a packaging material. In other words, according to the first production method of the present invention, a foam sheet can be favorably produced in which the number of cells per area of the foam sheet is in the above range.

It is particularly preferable that the average of the number of cells in the thickness direction of the foam sheet be 0.5 cells/mm or more and 5 cells/mm or less and the average of the number of cells per sectional area of the foam sheet be 30 cells/cm² or more and 3000 cells/cm² or less.

The number of cells per sectional area of the foam sheet is measured as follows.

First, the foam sheet is cut along a direction orthogonal to the extrusion direction of the foam sheet to form a cut surface (section in the width direction), and five or more cut surface observation portions are randomly selected in the width direction of the foam sheet. Next, each selected observation portion is observed with a microscope or the like at a magnification of about 50 times to obtain an enlarged image of each portion. Note that the enlarged photograph is taken to include the foam sheet over the entire thickness. Next, the area of the section of the foam sheet is determined in each enlarged image, and the cells present in the section are counted. At this time, cells intersecting the sides of each enlarged image are also counted. Then, the number of cells counted in each enlarged photograph is divided by the area of the section of the foam sheet in the enlarged image, and the unit is converted to determine the number of cells per sectional area (cells/cm²) of the foam sheet at each measurement portion. The arithmetic mean value of the number of cells per sectional area of the foam sheet is determined for 5 or more portions measured in this manner in total, and is regarded as the average of the number of cells per sectional area of the foam sheet.

### (Average Cell Diameter of Foam Sheet)

The average cell diameter (D) of the foam sheet is not particularly limited. The average cell diameter is preferably in a range of 0.1 mm or more and 3 mm or less, and is preferably 0.2 mm or more and 2 mm or less, and more preferably 0.3 mm or more and 1.5 mm or less.

The average cell diameter (D) of the foam sheet is determined as follows.

First, a cut surface along the extrusion direction at the central portion in the width direction of the foam sheet (section in the extrusion direction) and a cut surface orthogonal to the extrusion direction of the foam sheet (section in the width direction) are cut out, and five or more cut surface observation portions are randomly selected in each cut surface. Next, each selected observation portion is magnified about 50 times with a microscope or the like to obtain an enlarged image of each cut surface. Note that all of the cut surfaces are formed to be a surface along the thickness direction.

Next, all of the cells recognized in each enlarged image are measured to determine the cell diameter in the thickness direction and the cell diameter in the extrusion direction or the width direction of each cell. The cell diameters in the thickness direction, the cell diameters in the extrusion direction, and the cell diameters in the width direction measured are arithmetically averaged respectively, and the obtained values are regarded as the average cell diameter in the extrusion direction (MD), the average cell diameter in the width direction (TD), and the average cell diameter in the thickness direction (VD).

Then, the average cell diameter in the extrusion direction (MD), the average cell diameter in the width direction (TD), and the average cell diameter in the thickness direction (VD) obtained as described above are geometrically averaged to determine the average cell diameter (D) of the foam sheet.

Furthermore, a foam sheet having a multilayer structure can also be produced with the production method of the present invention. Hereinafter, the foam sheet having a multilayer structure may be referred to as a multilayer foam sheet. Specifically, a resin melt for formation of a resin layer obtained by kneading a polyethylene-based resin is layered on the above-described foamable resin melt obtained by kneading a polyethylene-based resin and a physical blowing agent in a co-extrusion die, the foamable resin melt and the resin melt for formation of a resin layer are co-extruded to extrusion-foam the foamable resin melt, and thus a multilayer foam sheet can be produced that has a polyethylene-based resin foamed layer and a polyethylene-based resin layer that is layered and bonded to the foamed layer.

In this case, the resin melt for formation of a resin layer is preferably a resin melt obtained by kneading a polyethylene-based resin and a volatile plasticizer. As the volatile plasticizer, a hydrocarbon having 3 to 6 carbon atoms or an alcohol such as ethanol can be used.

In the multilayer foam sheet, the resin layer may be layered on only one surface of the foamed layer, or may be layered on both surfaces of the foamed layer.

The basis weight of the multilayer foam sheet is preferably 10 g/m² or more and 200 g/m² or less, and the density of the multilayer foam sheet is preferably 20 kg/m³ or more and 100 kg/m³ or less.

The basis weight of the resin layer in the multilayer foam sheet is preferably 1 g/m² or more and 20 g/m² or less, and more preferably 2 g/m² or more and 10 g/m² or less on one surface.

From the viewpoint of obtaining a multilayer foam sheet having antistatic performance, the resin melt for formation of a resin layer preferably contains the above-described polymeric antistatic agent. In this case, the proportion of the polymeric antistatic agent blended in the resin melt for formation of a resin layer is preferably 5 mass% or more and 50 mass% or less, and more preferably 8 mass% or more and 30 mass% or less with respect to 100 mass% of the total of the polyethylene-based resin and the polymeric antistatic agent.

As an extrusion apparatus for a multilayer foam sheet, for example, an apparatus can be used in which the downstream side of an extruder for formation of a foamed layer is equipped with an annular die for co-extrusion and the downstream side of an extruder for formation of a resin layer is connected to the annular die for co-extrusion. Co-extrusion using such an extrusion apparatus forms a cylindrical multilayer foam, the multilayer foam is cut and opened as described above, and thus a multilayer foam sheet having a foamed layer and a resin layer can be produced. The resin layer may be in a non-foamed state or a foamed state. The resin layer may have a single layer structure or a multilayer structure.

As the resin included in the resin layer in the multilayer foam sheet, the above-described polyethylene-based resin can be used. Physical properties (the average thickness, the basis weight, the density, and the average of the number of cells) of the multilayer foam sheet can be determined by measuring the physical properties of the multilayer foam sheet in the same manner as in the above-described measurement of physical properties of the foam sheet.

### [Second Production Method]

Next, a second production method of the present invention will be described. The second production method is a method including extrusion-foaming a foamable resin melt containing a polyethylene-based resin that contains a recycled polyethylene-based resin derived from a foam sheet produced with the above-described first production method and a physical blowing agent to produce a foam sheet. Examples of the raw material for production of the recycled polyethylene-based resin include a foam sheet produced with the first production method and an offcut generated during performing the first production method.

According to the second production method, the amount of the component derived from the cell controlling agent contained in the recycled polyethylene-based resin is substantially zero or very small. Therefore, at the time of producing a polyethylene-based resin foam sheet, for example, a cell controlling agent is newly added, and thus it is possible to reduce the work and the time for adjustment of standards such as the foaming ratio, the number of cells, and the thickness of the sheet to desired ranges. As a result, although the recycled polyethylene-based resin is used, a foam sheet can be stably produced even in long-term production to the same extent as in the case of using 100% of a virgin resin (non-recycled resin) that is not recycled. Thus, it is also possible to reduce the amount of the sheet extruded until a good foaming state is reached (product loss).

Note that the main component of the recycled polyethylene-based resin is a polyethylene-based resin, and more preferably low-density polyethylene. The proportion of the polyethylene-based resin in the recycled polyethylene-based resin is preferably 80 mass% or more, and more preferably 90 mass% or more.

In a first aspect of the second production method, extrusion-foaming can be performed as in the above-described first production method except that a polyethylene-based resin is used that contains a recycled polyethylene-based resin derived from a foam sheet produced with the first production method. At this time, as the polyethylene-based resin, only a recycled polyethylene-based resin derived from a foam sheet produced with the first production method may be used, or the recycled polyethylene-based resin and a non-recycled polyethylene-based resin may be used. As a result, while a recycled raw material (recycled polyethylene-based resin) is used, a foam sheet can be produced that has a low contamination property to an article to be wrapped with high production efficiency. Note that the non-recycled polyethylene-based resin refers to an unused polyethylene-based resin as a raw material that has not been used in the past for producing a foam sheet or the like.

From another point of view, in a second aspect of the second production method, extrusion-foaming may be performed using a polyethylene-based resin that contains a recycled polyethylene-based resin derived from a foam sheet produced with the first production method and using a cell controlling agent as in a conventional method for producing a foam sheet. In this case, the restrictions on the physical blowing agent in the first production method are not imposed.

According to this aspect, a stable foam sheet can be produced for a long time using the recycled polyethylene-based resin, and a foam sheet can be produced with high production efficiency. A foam sheet produced according to the second aspect is suitably used, for example, for use having a moderate demand for contamination property to an article to be wrapped.

From the viewpoint of producing a good foam sheet stably while using a recycled polyethylene-based resin, in the second production method, a polyethylene-based resin foam sheet is preferably obtained by foaming a foamable resin melt containing a polyethylene-based resin that contains a recycled polyethylene-based resin derived from a foam sheet produced with the first production method and contains a non-recycled polyethylene-based resin, and containing a physical blowing agent.

In the case of using a recycled polyethylene-based resin and a non-recycled polyethylene-based resin in combination, the mass ratio of the recycled polyethylene-based resin to the non-recycled polyethylene-based resin is preferably recycled polyethylene-based resin : the non-recycled polyethylene-based resin = 3 : 97 to 90 : 10, more preferably recycled polyethylene-based resin : the non-recycled polyethylene-based resin = 5 : 95 to 80 : 20, and still more preferably recycled polyethylene-based resin : the non-recycled polyethylene-based resin = 10 : 90 to 70 : 30 from the viewpoint of more stably producing a good foam sheet while increasing the recycling efficiency.

Note that the recycled polyethylene-based resin can be produced, for example, by supplying a material such as a foam sheet subjected to a treatment such as crushing as necessary to an extruder, melt-kneading the material in the extruder to form a resin melt, and then extruding the resin melt from the extruder to pelletize the resin melt into a predetermined shape.

In the second production method, any material can be appropriately blended in addition to the polyethylene-based resin and the physical blowing agent as long as the object and an effect of the present invention are not impaired. For example, in addition to the above-described polyethylene-based resin, any polymer can be used. Examples of the polymer include thermoplastic resins other than polyethylene-based resins, such as polypropylene-based resins and polystyrene-based resins, and elastomers such as ethylene propylene rubber and styrene-butadiene-styrene block copolymers. In a case where the polymer is blended, the amount of the polymer blended is preferably 30 parts by mass or less, more preferably 20 parts by mass or less, and particularly preferably 10 parts by mass or less with respect to 100 parts by mass of the total of the recycled polyethylene-based resin and the non-recycled polyethylene-based resin used in the second production method. Also in the second production method, an additive similar to that in the first production method can be added.

### [Polyethylene-Based Resin Foam Sheet]

Next, the polyethylene-based resin foam sheet of the present invention (hereinafter, also referred to as the foam sheet of the present invention) will be described.

The foam sheet of the present invention is a polyethylene-based resin foam sheet obtained by extrusion-foaming a foamable resin melt containing a polyethylene-based resin and a physical blowing agent, the polyethylene-based resin foam sheet has a density of 20 kg/m³ or more and 100 kg/m³ or less and an average of the number of cells of 0.5 cells/mm or more and 5 cells/mm or less in the thickness direction, the foam sheet has an ash content of less than 0.1 mass% (including 0), and the ash content includes sodium at a proportion of 10 mass% or less (including 0).

In the foam sheet of the present invention, the amount of the component derived from the remaining cell controlling agent in the foam sheet is small or zero. Therefore, the foam sheet can be suitably used in a field where high cleanliness is required, such as the field of packaging materials or interleaves for glass panels for image display devices such as liquid crystal displays and glass plates for cover glasses for mobile phones and the like, or the field of packaging materials for electronic devices. Furthermore, a recycled raw material (recycled polyethylene-based resin) can be obtained that is capable of achieving stable production of a foam sheet.

In the present invention, the density and the average of the number of cells in the thickness direction are designed in desired ranges, and therefore a good cushioning property can be exhibited as a wrapping material, a packaging material, an interleaf, or the like.

Although the method for producing a foam sheet of the present invention is not particularly limited, the first production method or the first aspect of the second production method described above is referred to as an example of a desirable production method.

The description regarding the first production method described above is referred to for the ways of determining the preferable numerical range and the average of the ash content, the density and the number of cells in the thickness direction of the foam sheet of the present invention.

The description regarding the first production method described above is appropriately referred to for the preferable numerical ranges and the measurement methods of the average thickness of the foam sheet of the present invention, the proportion of sodium in the ash content of the foam sheet, the basis weight of the foam sheet, the number of cells per area of the foam sheet, and the average cell diameter of the foam sheet. The above-described MD, TD, VD, and D are referred to for the average cell diameter of the foam sheet herein.

### Examples

Hereinafter, the present invention will be described in detail with reference to Examples. In each of Examples, the following extrusion apparatus and raw materials were used.

Regarding the first production method of the present invention and the foam sheet of the present invention produced with the first production method, Examples 1 to 10, Comparative Examples 1 to 12, and Reference Examples 1 and 2 are shown below. Tables 1 and 2 appropriately show the production conditions and the measurement results of these Examples, Comparative Examples, and Reference Examples.

Regarding the second production method of the present invention, Examples 11 to 13 and Comparative Examples 13 and 14 are shown below.

### Extrusion apparatus:

A production apparatus was used in which a tandem extruder was used that included a first extruder having a barrel inner diameter of 65 mm and a second extruder connected to the downstream side of the first extruder and having a barrel inner diameter of 95 mm, the outlet of the second extruder was equipped with an annular die (lip diameter: 90 mm), and a mandrel having a diameter of about 210 mm was disposed on the downstream side of the annular die. The extrusion apparatus equipped with the mandrel having a cutter blade for cutting of the cylindrical foam was used.

### Raw materials:

### (Polyethylene-Based Resin)

As a polyethylene-based resin (non-recycled polyethylene-based resin), low-density polyethylene (NUC-8321 manufactured by ENEOS NUC Corporation, MFR (190°C, load 2.16 kg) 2.4 g/10 min) was used.

### (Physical Blowing Agent)

· As butane used as an organic physical blowing agent, mixed butane (supplier: Koike Kagaku, mixture of 70 mol% of normal butane and 30 mol% of isobutane, described as Bu in Table) was used.
· As a dialkyl ether used as an organic physical blowing agent, dimethyl ether (manufactured by Koike Kagaku, described as DME in Table) was used.
· As nitrogen, nitrogen (supplier: TOMOE SHOKAI CO., LTD., described as N₂ in Table) was used.
· As carbon dioxide, carbon dioxide (supplier: WATARI Co., Ltd., described as CO₂ in Table) was used.

### (Cell Controlling Agent)

· As an inorganic substance, talc (Hifiller #12, manufactured by Matsumura Sangyo Co., Ltd.) was used.
· As a chemical blowing agent, a baking soda-citric acid-based chemical blowing agent (mixture of sodium hydrogen carbonate and monosodium citrate, FINECELL MASTER PO217K, manufactured by Dainichiseika Color & Chemicals Mfg. Co., Ltd.) was used.

### [Example 1]

To a first extruder in an extrusion apparatus, 100 parts by mass of a polyethylene-based resin was supplied, and heated, melted, and kneaded to prepare a resin melt having a temperature adjusted to about 220°C. Next, into the resin melt, a physical blowing agent of a kind shown in Table 1 was added in an amount shown in Table 1 and injected, heated and kneaded, and then transferred to a second extruder connected to the downstream side of the first extruder to prepare a foamable resin melt in which the resin temperature was adjusted to about 110°C. Note that Table 1 shows the molar amount of the physical blowing agent per kg of the resin component included in the foamable resin melt.

The foamable resin melt obtained as described above was extruded from the die lip of the annular die into the atmosphere at a discharge rate of 40 kg/hr and foamed to form a cylindrical foam. While the cylindrical foam was widened at a widening ratio of 3.5 with a cylindrical widening apparatus (mandrel) having a diameter of about 210 mm, the cylindrical foam was hauled off with a haul-off machine at a haul-off speed of 26 m/min so as to have a basis weight shown in Table 1, and the cylindrical foam was cut and opened along the extrusion direction to obtain a polyethylene-based resin foam sheet having a width of about 660 mm. Next, the obtained foam sheet was wound using a core tube (outer diameter: 76 mm) to obtain a rolled product having a foam sheet length of 600 m in the extrusion direction and a diameter of about 720 mm.

The obtained rolled product was aged at 40°C under atmospheric pressure for 72 hours. Then, the foam sheet was measured to determine the average thickness, the basis weight, the density, the ash content, the proportion of sodium in the ash content, the average cell diameter, and the average of the number of cells.

Foam sheets were produced in Examples 2 to 10, Comparative Examples 1 to 12, and Reference Examples 1 and 2 in the same manner as in Example 1 except for the changes shown in Table 1. Note that Table 1 shows, as the amount of the cell controlling agent used in each of Reference Examples 1 and 2, the amount (parts by mass) of the cell controlling agent added with respect to 100 parts by mass of the resin component included in the foamable resin melt.

The foam sheet obtained as described above in each of Examples and Reference Examples was measured with the methods described below to determine the average thickness, the basis weight, the density, the ash content, the proportion of sodium in the ash content, the average cell diameter (MD, TD, VD, D), the average of the number of cells in the thickness direction, and the average of the number of cells per sectional area. Table 2 shows the measurement results. Note that in each of Comparative Examples, a good foam sheet was not obtained, and therefore the above-described measurement was not performed. The observation of the sheet in each of Comparative Examples (*1 and *2 in Table 2) will be described below.

### (Average Thickness)

First, a cut surface orthogonal to the extrusion direction of the foam sheet (section in the width direction) was cut out from the foam sheet, and five cut surface observation portions were randomly selected in the width direction of the foam sheet. Next, each selected observation portion was magnified about 50 times with a microscope or the like to obtain an enlarged image of each portion. Next, the thickness of the foam sheet was measured at random 10 points in each enlarged image. The arithmetic mean value of the measured thicknesses at 50 portions in total was regarded as the average thickness (mm) of the foam sheet.

### (Basis Weight)

The foam sheet was cut along the width direction of the foam sheet, and thus a sample having a length of 100 mm in the extrusion direction × the entire width of the sheet (about 660 mm) was cut out. The mass of the sample was measured, and the unit was converted into g/m² to determine the basis weight of the foam sheet.

### (Density)

The density (g/m³) of the foam sheet was calculated by dividing the basis weight of the foam sheet obtained as described above by the average thickness of the foam sheet.

### (Ash Content)

The ash content in the foam sheet was measured in accordance with the direct ashing method (Method A) in JIS K7250-1: 2006. Specifically, first, the foam sheet was cut so as to be containable in a crucible, and thus about 10 g of a measurement sample was obtained. The mass W1 of the measurement sample was measured, and then the measurement sample was put into the crucible and heated for 1 hour in an electric furnace with an ambient temperature set to 600°C. After the heating, the mass of the crucible containing the combustion residue (ash content) was measured, and from this measured mass, the mass of the crucible was subtracted to measure the mass W2 of the ash content. The measured mass W2 of the ash content was divided by the mass W1 of the measurement sample, and the result was expressed with the percentage to determine the ash content of the foam sheet.

Table 2 shows the result as the ash content (mass%) in the foam sheet. As the electric furnace, Muffle Furnace MF28 manufactured by Yamato Scientific Co., Ltd. was used.

### (Proportion of Sodium in Ash Content)

The proportion of sodium in the ash content in the foam sheet was measured with an energy dispersive X-ray analyzer. Specifically, using the ash content in the foam sheet as a measurement sample, 0.2 g of the measurement sample was put into a measurement cup, and the cup was installed in an energy dispersive X-ray analyzer ("EDXL 300" manufactured by Rigaku Corporation). The ash content was subjected to energy dispersive X-ray analysis under the condition in which the detector was an SSD detector and the X-ray tube output was 50 W (50 kV, 1 mA), and the proportion (mass%) of sodium in the ash content was measured with respect to 100 mass% of the total ash content (measurement sample).

### (Average Cell Diameter; MD, TD, VD, D)

The foam sheet was cut along the width direction to prepare two measurement sheets each having a length of 10 cm in the extrusion direction and the entire sheet width (a length in the width direction of about 66 cm). One measurement sheet was cut along the extrusion direction at the central portion in the width direction of the measurement sheet to obtain a section in the extrusion direction. The section of the other measurement sheet was taken as a section in the width direction. The cutting was performed, in both directions, along the thickness direction. From each cut surface obtained as described above, five observation portions were randomly selected. Then, each selected observation portion was magnified 50 times with a microscope or the like, and an enlarged image was taken.

Next, all of the cells recognized in each enlarged image were measured to determine the cell diameter (mm) in the thickness direction and the cell diameter in the extrusion direction or the width direction of each cell. The cell diameters in the thickness direction, the cell diameters in the extrusion direction, and the cell diameters in the width direction measured were arithmetically averaged respectively to obtain the average cell diameter in the thickness direction (VD), the average cell diameter in the extrusion direction (MD), and the average cell diameter in the width direction (TD). Then, the average cell diameters in three directions obtained as described above were geometrically averaged to determine the average cell diameter (D).

### (Average of Number of Cells in Thickness Direction)

The foam sheet was cut in the direction orthogonal to the extrusion direction to form a cut surface over the entire sheet width, and five cut surface observation portions were randomly selected in the width direction of the foam sheet. Next, each selected observation portion was observed with a microscope at a magnification of about 50 times, and an enlarged image of the portion was taken. Then, in the enlarged image, 10 line segments along the thickness direction of the foam sheet were randomly drawn on the cut surface, and the cells intersecting the line segments were counted. Then, the number of counted cells was divided by the length of the line segment, and the unit was converted to determine the number of cells per thickness (cells/mm) of the foam sheet at each measurement portion.

The arithmetic mean value of the number of cells per thickness of the foam sheet was determined for 50 portions measured in this manner in total, and was regarded as the average of the number of cells in the thickness direction of the foam sheet. The measurement results are shown as "Average number of cells in thickness direction" in the table.

### (Number of Cells per Sectional Area)

In the same manner as in the above-described way of determining the average of the number of cells in the thickness direction, five cut surface observation portions were randomly selected in a cut surface in the width direction of the foam sheet, and an enlarged image of each observation portion was taken so as to include the foam sheet over the entire thickness. Then, the sectional area of the foam sheet was determined in each enlarged image, and the cells present in the section were counted. At this time, cells intersecting the sides of each enlarged image were also counted. Then, the number of cells counted in each enlarged photograph was divided by the area of the section of the foam sheet in the enlarged image, and the unit was converted to determine the number of cells per sectional area (cells/cm²) of the foam sheet at each measurement portion. The arithmetic mean value of the number of cells per sectional area of the foam sheet was determined for 50 portions measured in this manner in total, and was regarded as the number of cells per sectional area of the foam sheet.

### (Observation of Sheets of Comparative Examples 1 to 12)

As shown in Table 2, the states of the sheets of Comparative Examples 1 to 12 corresponded to any of the following observation results, and specific measurement was impossible.
(*1) Cells were excessively fine, and a foam sheet during haul-off was frequently cut, so that production of a foam sheet was difficult.
(*2) An extruded sheet was seen here and there having portions where excessive cells were partially generated and portions where foaming did not occur partially, and a foamable resin melt did not foam well, so that production of a foam sheet was difficult.

### [Example 11]

A recycled raw material (recycled polyethylene-based resin) was prepared using the foam sheet produced in Examples having a density of 20 to 60 kg/m³ and an average of the number of cells in the thickness direction of 0.5 cells/mm or more and 5 cells/mm or less. Specifically, the foam sheet produced in Examples was crushed so as to be easily supplied to an extruder for preparation of a recycled polyethylene-based resin (single screw extruder having an inner diameter of 65 mm), then supplied to the extruder, and melt-kneaded at a maximum temperature of 175°C to form a molten resin. Next, the molten resin was extruded from the extruder into a strand shape at a discharge rate of 150 kg/hr, and the extruded resin was cut into a pellet shape to prepare a recycled polyethylene-based resin.

A foam sheet was produced under the conditions similar to those in Example 1 except that 20 parts by mass of the recycled polyethylene-based resin obtained as described above and 80 parts by mass of the non-recycled polyethylene-based resin were used as the polyethylene-based resin.

In this way, a foam sheet was continuously produced for 6 hours so that the obtained foam sheet had an average thickness of 1.0 mm, a density of 42 kg/m³, and an average of the number of cells per sectional area of the foam sheet of 200 cells/cm².

In the above-described production, the density and the average of the number of cells of the foam sheet were confirmed every 20 minutes, and as a result, the density of the foam sheet did not fluctuate by ±10% or more of the density, and the average of the number of cells did not fluctuate by ±10% or more. Thus, it has been confirmed that the second production method of the present invention enables stable long-term production of a foam sheet.

### [Example 12]

A foam sheet was produced in the same manner as in Reference Example 1 except that 20 parts by mass of a recycled polyethylene-based resin and 80 parts by mass of the non-recycled polyethylene-based resin similar to those used in Example 11 were used.

In this way, a foam sheet was continuously produced for 6 hours so that the obtained foam sheet had an average thickness of 1.0 mm, a density of 42 kg/m³, and an average of the number of cells per sectional area of the foam sheet of 500 cells/cm².

In the above-described production, the density and the average of the number of cells of the foam sheet were confirmed every 20 minutes, and as a result, the density of the foam sheet did not fluctuate by ±10% or more of the density, and the average of the number of cells did not fluctuate by ±10% or more. This fact enabled stable long-term production of a foam sheet. Thus, it has been confirmed that the second production method of the present invention enables stable long-term production of a foam sheet.

### [Example 13]

A foam sheet was produced under the conditions similar to those in Example 1 except that 60 parts by mass of a recycled polyethylene-based resin and 40 parts by mass of the non-recycled polyethylene-based resin similar to those used in Example 11 were used.

In this way, a foam sheet was continuously produced for 6 hours so that the obtained foam sheet had an average thickness of 1.0 mm, a density of 42 kg/m³, and an average of the number of cells per sectional area of the foam sheet of 200 cells/cm².

In the above-described production, the density and the average of the number of cells of the foam sheet were confirmed every 20 minutes, and as a result, the density of the foam sheet did not fluctuate by ±10% or more of the density, and the average of the number of cells did not fluctuate by ±10% or more. Thus, it has been confirmed that the second production method of the present invention enables stable long-term production of a foam sheet.

### [Comparative Example 13]

A recycled polyethylene-based resin was prepared in the same manner as in Example 11 using a foam sheet that was produced by adding 0.1 to 1 part by mass of talc as a cell controlling agent to 100 parts by mass of the resin component included in the foamable resin melt and had a density of 20 to 60 kg/m³ and an average of the number of cells in the thickness direction of 0.5 cells/mm or more and 5 cells/mm or less. Then, a foam sheet was produced in the same manner as in Reference Example 1 except that 20 parts by mass of this recycled polyethylene-based resin and 80 parts by mass of the non-recycled polyethylene-based resin were used.

In this way, a foam sheet was continuously produced for 6 hours so that the obtained foam sheet had an average thickness of 1.0 mm, a density of 42 kg/m³, and an average of the number of cells per sectional area of the foam sheet of 500 cells/cm².

In the above-described production, the density and the average of the number of cells of the foam sheet were confirmed every 20 minutes. As a result, a case occurred twice in total in which the density of the foam sheet fluctuated by ±10% or more of the density and/or the average of the number of cells fluctuated by ±10% or more, and in each case, the foaming conditions were adjusted so that the physical properties of the foam sheet satisfied the standards. Thus, in Comparative Example 13, stable long-term production of a foam sheet was more difficult than in Example 11.

### [Comparative Example 14]

A recycled polyethylene-based resin was prepared in the same manner as in Example 11 using a foam sheet that was produced by adding 1 to 3 parts by mass of baking soda-citric acid-based chemical blowing agent as a cell controlling agent to 100 parts by mass of the resin component included in the foamable resin melt and had a density of 20 to 60 kg/m³ and an average of the number of cells in the thickness direction of 0.5 cells/mm or more and 5 cells/mm or less. Then, a foam sheet was produced in the same manner as in Reference Example 2 except that 20 parts by mass of this recycled polyethylene-based resin and 80 parts by mass of the non-recycled polyethylene-based resin were used.

In this way, a foam sheet was continuously produced for 6 hours so that the obtained foam sheet had an average thickness of 1.0 mm, a density of 44 kg/m³, and an average of the number of cells per sectional area of the foam sheet of 350 cells/cm².

In the above-described production, the density and the average of the number of cells of the foam sheet were confirmed every 20 minutes. As a result, a case occurred twice in total in which the density of the foam sheet fluctuated by ±10% or more of the density and/or the average of the number of cells fluctuated by ±10% or more, and in each case, the foaming conditions were adjusted so that the physical properties of the foam sheet satisfied the standards. Thus, in Comparative Example 14, stable long-term production of a foam sheet was more difficult than in Example 11.

**[Table 1]**

| No. | Physical blowing agent | | | | | | Cell controlling agent | | Haul-off speed |
|---|---|---|---|---|---|---|---|---|---|
| | A | | B | C | A+B | A/B | Talc | Chemical blowing agent | |
| | Bu | DME | N₂ | CO₂ | | | | | |
| | mol/kg | mol/kg | mol/kg | mol/kg | mol/kg | - | Parts by mass | Parts by mass | m/min |
| Example 1 | 1,9 | - | 0,32 | - | 2,22 | 5,9 | - | - | 26 |
| Example 2 | 1,9 | - | 0,20 | - | 2,10 | 9,5 | - | - | 26 |
| Example 3 | 1,9 | - | 0,36 | - | 2,26 | 5,3 | - | - | 26 |
| Example 4 | 1,9 | - | 0,32 | - | 2,22 | 5,9 | - | - | 60 |
| Example 5 | 1,9 | - | 0,36 | - | 2,26 | 5,3 | - | - | 60 |
| Example 6 | 1,1 | - | 0,20 | - | 1,30 | 5,5 | - | - | 26 |
| Example 7 | 1,1 | - | 0,36 | - | 1,46 | 3,1 | - | - | 26 |
| Example 8 | 2,7 | - | 0,20 | - | 2,90 | 13,5 | - | - | 26 |
| Example 9 | 2,7 | - | 0,36 | - | 3,06 | 7,5 | - | - | 26 |
| Example 10 | 1,6 | 1,0 | 0,32 | - | 2,85 | 7,9 | - | - | 26 |
| Comparative Example 1 | 0,4 | - | 0,40 | - | 0,80 | 1,0 | - | - | 26 |
| Comparative Example 2 | 1,1 | - | - | - | 1,10 | - | - | - | 26 |
| Comparative Example 3 | 1,1 | - | 0,45 | - | 1,55 | 2,4 | - | - | 26 |
| Comparative Example 4 | 1,1 | - | 0,55 | - | 1,65 | 2,0 | - | - | 26 |
| Comparative Example 5 | - | - | 1,10 | - | 1,10 | - | - | - | 26 |
| Comparative Example 6 | 1,9 | - | - | - | 1,90 | - | - | - | 26 |
| Comparative Example 7 | 1,9 | - | 0,10 | - | 2,00 | 19 | - | - | 26 |
| Comparative Example 8 | - | - | 1,90 | - | 1,90 | - | - | - | 26 |
| Comparative Example 9 | 2,7 | - | 0,10 | - | 2,80 | 27 | - | - | 26 |
| Comparative Example 10 | 2,7 | - | 0,45 | - | 3,15 | 6,0 | - | - | 26 |
| Comparative Example 11 | 1,9 | - | - | 0,20 | 2,10 | 9,5 | - | - | 26 |
| Comparative Example 12 | 2,7 | - | - | 0,20 | 2,90 | 13,5 | - | - | 26 |
| Reference Example 1 | 1,9 | - | 0 | - | 1,90 | - | 0,3 | - | 26 |
| Reference Example 2 | 1,9 | - | 0 | - | 1,90 | - | - | 1,8 | 26 |

**[Table 2]**

| No. | Physical properties of foam sheet | | | | | | | | | | |
|---|---|---|---|---|---|---|---|---|---|---|---|
| | Average thickness | Basis weight | Density | Ash content | Proportion of Na in ash content | Average cell diameter | | | | Average number of cells in thickness direction | Average number of cells per sectional area |
| | | | | | | MD | TD | VD | D | | |
| | mm | g/m² | kg/m³ | mass% | mass% | mm | | | | cells/mm | cells /cm² |
| Example 1 | 1,0 | 42 | 42 | 0 | - | 0,7 | 0,7 | 0,8 | 0,7 | 0,8 | 201 |
| Example 2 | 1,1 | 44 | 39 | 0 | - | 2,0 | 1,8 | 1,6 | 1,8 | 0,7 | 41 |
| Example 3 | 1,1 | 42 | 39 | 0 | - | 0,5 | 0,5 | 0,5 | 0,5 | 2,1 | 553 |
| Example 4 | 0,2 | 25 | 104 | 0 | - | 0,4 | 0,3 | 0,2 | 0,3 | 1,9 | 1170 |
| Example 5 | 0,2 | 25 | 104 | 0 | - | 0,3 | 0,2 | 0,2 | 0,2 | 1,9 | 2632 |
| Example 6 | 0,9 | 60 | 66 | 0 | - | 1,9 | 1,9 | 1,1 | 1,6 | 0,8 | 46 |
| Example 7 | 1,3 | 60 | 47 | 0 | - | 0,5 | 0,6 | 0,4 | 0,5 | 3,0 | 471 |
| Example 8 | 0,9 | 28 | 31 | 0 | - | 1,9 | 1,6 | 1,0 | 1,5 | 0,9 | 56 |
| Example 9 | 0,9 | 29 | 32 | 0 | - | 0,8 | 0,6 | 0,5 | 0,6 | 1,8 | 321 |
| Example 10 | 1,1 | 44 | 39 | 0 | - | 0,7 | 0,6 | 0,8 | 0,7 | 1,3 | 235 |
| Comparative Example 1 | (*1) | | | | | | | | | | |
| Comparative Example 2 | (*2) | | | | | | | | | | |
| Comparative Example 3 | (*1) | | | | | | | | | | |
| Comparative Example 4 | (*1) | | | | | | | | | | |
| Comparative Example 5 | (*1) | | | | | | | | | | |
| Comparative Example 6 | (*2) | | | | | | | | | | |
| Comparative Example 7 | (*2) | | | | | | | | | | |
| Comparative Example 8 | (*1) | | | | | | | | | | |
| Comparative Example 9 | (*2) | | | | | | | | | | |
| Comparative Example 10 | (*1) | | | | | | | | | | |
| Comparative Example 11 | (*2) | | | | | | | | | | |
| Comparative Example 12 | (*2) | | | | | | | | | | |
| Reference Example 1 | 1,0 | 42 | 42 | 0,32 | 0 | 0,7 | 0,5 | 0,3 | 0,5 | 2,4 | 510 |
| Reference Example 2 | 1,0 | 43 | 44 | 0,05 | 44 | 0,6 | 0,7 | 0,5 | 0,6 | 2,1 | 354 |

The above-described embodiments include the following technical concepts.
(1) A method for producing a polyethylene-based resin foam sheet, the method including extrusion-foaming a foamable resin melt containing a polyethylene-based resin and a physical blowing agent to produce a polyethylene-based resin foam sheet, wherein
   the physical blowing agent contains organic physical blowing agents selected from hydrocarbons having 3 to 5 carbon atoms and dialkyl ethers having an alkyl group having 1 to 3 carbon atoms, and contains nitrogen,
   a total (A + B) of an amount A of the organic physical blowing agents added and an amount B of the nitrogen added is 0.5 mol or more and 5 mol or less per kg of a resin component included in the foamable resin melt,
   the amount B of the nitrogen added is 0.1 mol or more and 0.4 mol or less per 1 kg of the resin component included in the foamable resin melt, and
   a ratio (A/B) of the amount A of the one or more organic physical blowing agents added to the amount B of the nitrogen added is 2 or more and 18 or less.
(2) The method for producing a polyethylene-based resin foam sheet described in (1) above, wherein a powdery inorganic substance (not containing a chemical blowing agent) and a chemical blowing agent are not added to the foamable resin melt, or a powdery inorganic substance (not containing a chemical blowing agent) and a chemical blowing agent are added to the foamable resin melt, and a total of an amount of the inorganic substance added and an amount of the chemical blowing agent added is less than 0.1 parts by mass with respect to 100 parts by mass of the resin component included in the foamable resin melt.
(3) The method for producing a polyethylene-based resin foam sheet described in (1) or (2) above, wherein the polyethylene-based resin foam sheet has a density of 20 kg/m³ or more and 100 kg/m³ or less.
(4) The method for producing a polyethylene-based resin foam sheet described in any one of (1) to (3) above, wherein the polyethylene-based resin foam sheet has an average of a number of cells of 0.5 cells/mm or more and 5 cells/mm or less in a thickness direction of the polyethylene-based resin foam sheet.
(5) The method for producing a polyethylene-based resin foam sheet described in any one of (1) to (4) above, wherein the polyethylene-based resin contains a recycled polyethylene-based resin derived from the polyethylene-based resin foam sheet.
(6) A method for producing a polyethylene-based resin foam sheet, the method including extrusion-foaming a foamable resin melt containing a polyethylene-based resin and a physical blowing agent, the polyethylene-based resin containing a recycled polyethylene-based resin derived from a foam sheet produced with the method for producing a polyethylene-based resin foam sheet described in any one of (1) to (5) above, to produce a polyethylene-based resin foam sheet.
(7) The method for producing a polyethylene-based resin foam sheet according to claim 6, wherein
   the polyethylene-based resin contains the recycled polyethylene-based resin and a non-recycled polyethylene-based resin, and
   a mass ratio of the recycled polyethylene-based resin to the non-recycled polyethylene-based resin is 3 : 97 to 90 : 10.
(8) A polyethylene-based resin foam sheet obtained by extrusion-foaming a foamable resin melt containing a polyethylene-based resin and a physical blowing agent, the polyethylene-based resin foam sheet having a density of 20 kg/m³ or more and 100 kg/m³ or less and an average of a number of cells of 0.5 cells/mm or more and 5 cells/mm or less in a thickness direction,
   the polyethylene-based resin foam sheet having an ash content of less than 0.1 mass% (including 0), the ash content including sodium at a proportion of 10 mass% or less (including 0).

## Claims

1. A method for producing a polyethylene-based resin foam sheet, the method comprising extrusion-foaming a foamable resin melt containing a polyethylene-based resin and a physical blowing agent to produce a polyethylene-based resin foam sheet, wherein
the physical blowing agent contains one or more organic physical blowing agents selected from hydrocarbons having 3 to 5 carbon atoms and dialkyl ethers having an alkyl group having 1 to 3 carbon atoms, and contains nitrogen,
a total (A + B) of an amount A of the organic physical blowing agents added and an amount B of the nitrogen added is 0.5 mol or more and 5 mol or less per kg of a resin component in the foamable resin melt,
the amount B of the nitrogen added is 0.1 mol or more and 0.4 mol or less per kg of the resin component in the foamable resin melt, and
a ratio (A/B) of the amount A of the organic physical blowing agents added to the amount B of the nitrogen added is 2 or more and 18 or less.

2. The method for producing a polyethylene-based resin foam sheet according to claim 1, wherein a powdery inorganic substance (not containing a chemical blowing agent) and a chemical blowing agent are not added to the foamable resin melt, or a powdery inorganic substance (not containing a chemical blowing agent) and/or a chemical blowing agent is added to the foamable resin melt, and a total of an amount of the inorganic substance added and an amount of the chemical blowing agent added is less than 0.1 parts by mass with respect to 100 parts by mass of the resin component included in the foamable resin melt.

3. The method for producing a polyethylene-based resin foam sheet according to claim 1 or 2, wherein the polyethylene-based resin foam sheet has a density of 20 kg/m³ or more and 100 kg/m³ or less.

4. The method for producing a polyethylene-based resin foam sheet according to any one of claims 1 to 3, wherein the polyethylene-based resin foam sheet has an average of a number of cells of 0.5 cells/mm or more and 5 cells/mm or less in a thickness direction of the polyethylene-based resin foam sheet.

5. The method for producing a polyethylene-based resin foam sheet according to any one of claims 1 to 4, wherein the polyethylene-based resin contains a recycled polyethylene-based resin derived from the polyethylene-based resin foam sheet.

6. A method for producing a polyethylene-based resin foam sheet, the method comprising extrusion-foaming a foamable resin melt containing a polyethylene-based resin and a physical blowing agent, the polyethylene-based resin containing a recycled polyethylene-based resin derived from a polyethylene-based resin foam sheet produced with the method for producing a polyethylene-based resin foam sheet according to any one of claims 1 to 5, to produce a polyethylene-based resin foam sheet.

7. The method for producing a polyethylene-based resin foam sheet according to claim 6, wherein
the polyethylene-based resin contains the recycled polyethylene-based resin and a non-recycled polyethylene-based resin, and
a mass ratio of the recycled polyethylene-based resin to the non-recycled polyethylene-based resin is 3 : 97 to 90 : 10.

8. A polyethylene-based resin foam sheet obtained by extrusion-foaming a foamable resin melt containing a polyethylene-based resin and a physical blowing agent, the polyethylene-based resin foam sheet having a density of 20 kg/m³ or more and 100 kg/m³ or less and an average of a number of cells of 0.5 cells/mm or more and 5 cells/mm or less in a thickness direction,
the polyethylene-based resin foam sheet having an ash content of less than 0.1 mass% (including 0), the ash content including sodium at a proportion of 10 mass% or less (including 0).
